# EUROPÄISCHE PATENTANMELDUNG

(11) **EP 3 799 266 A1**
(43) Veröffentlichungstag der Anmeldung: **31.03.2021**
(21) Anmeldenummer: 20195487.2
(22) Anmeldetag: 10.09.2020
(51) Int. Cl.: H02K 3/24, H02K 9/00, H02K 15/00, H02K 15/12

(54) **ELEKTRISCHE ANTRIEBSVORRICHTUNG UND HERSTELLVERFAHREN FÜR EINE WÄRMETAUSCHEREINRICHTUNG, INSBESONDERE ZUR VERWENDUNG BEI EINER ELEKTRISCHEN ANTRIEBSVORRICHTUNG**

(30) Priorität: 25.09.2019 DE 102019214695
(71) Anmelder: Mahle International GmbH, 70376 Stuttgart (DE)
(72) Erfinder: HOFFMANN, Hermann, 70794 Filderstadt (DE); SCHNEIDER, Michael, 63322 Rödermark (DE); SENJIC, Sascha, 70376 Stuttgart (DE); WEIS, Maximilian, 74427 Fichtenberg (DE)
(74) Vertreter: BRP Renaud & Partner mbB Rechtsanwälte Patentanwälte Steuerberater

(57) **Zusammenfassung**

Die vorliegende Erfindung betrifft eine elektrische Antriebsvorrichtung (10) mit einem Elektromotor (11), der eine Statoranordnung (20) und eine Ankeranordnung (42) aufweist, wobei die Statoranordnung (20) einen oder mehrere sich längs der Drehlängsachse erstreckende Bestückungsabschnitte (60) zum Bestücken mit Statorantriebsmitteln (61) und einen oder mehrere sich längs der Drehlängsachse (12) erstreckende Kanalführungsabschnitte (62) umfasst. Die Antriebsvorrichtung (10) umfasst ferner eine Wärmetauschereinrichtung (70) zum Austauschen von Wärmeverlustenergie zwischen der Statoranordnung (20) und/oder der Ankeranordnung (42) einerseits und einem Wärmetauscherfluid andererseits, wobei die Wärmetauschereinrichtung (70) ein von dem Wärmetauscherfluid durchströmbares Fluidkanalsystem (71) umfasst, das wenigstens einen Fluidkanal (72) aufweist. Der Fluidkanal (72) erstreckt sich dabei längs durch die Statoranordnung (20), wobei jeder Fluidkanal (72) an wenigstens einer Statorantriebsmittel-Mantelfläche (63) eines Statorantriebsmittels (61) berührend anliegt.

## Beschreibung

Die Erfindung betrifft eine elektrische Antriebsvorrichtung nach dem Oberbegriff des Anspruchs 1 und ferner ein Herstellverfahren für eine Wärmetauschereinrichtung, insbesondere zur Verwendung bei einer elektrischen Antriebsvorrichtung.

Antriebsvorrichtungen, insbesondere elektrische Antriebsvorrichtungen, sind seit langem bekannt und werden vorzugsweise im Bereich der Kraftfahrzeugtechnik eingesetzt, um ein Antriebsmoment und eine Antriebsbewegung bereitzustellen. Beispielsweise werden derartige Antriebsvorrichtungen gerne zum Antreiben eines Stellglieds herangezogen, bei denen es sich beispielsweise im Bereich der Kraftfahrzeugtechnik häufig, um Ventile, Wastegate-Ventile, Drosselklappen oder sogar Scheibenwischer handelt.

Die bekannten elektrischen Antriebsvorrichtungen sind in einem hohen Maße für ihre jeweiligen Aufgaben optimiert und bezüglich der spezifischen Anforderungen bestens angepasst, um insbesondere relativ hohe Antriebsmomente und relativ hohe Antriebsleistungen bereitzustellen. Vor diesem Hintergrund ist es regelmäßig wünschenswert, den gesamt technischen Wirkungsgrad, sozusagen die Effektivität, der elektrischen Antriebsvorrichtungen konstant zu halten oder zu verbessern.

Aber gerade, wenn die beschriebenen elektrischen Antriebsvorrichtungen, beispielsweise über einen längeren Zeitraum, in Betrieb sind und relativ hohe Antriebsmomente und relativ hohe Antriebsleistungen bereitstellen, kommt es zu einer Erwärmung der von den elektrischen Antriebsvorrichtungen umfassten Antriebskomponenten.

Die Erwärmung der elektrischen Antriebsvorrichtungen hat dabei vielfältige Ursachen, und lässt sich beispielsweise auf den elektrischen ohmschen Widerstand von Spulenanordnungen, auf Ummagnetisierungseffekte innerhalb der elektrischen Antriebsvorrichtungen, auf Wirbelstromverluste oder Lagerreibung zurückführen.

Die Erwärmung solcher elektrischen Antriebsvorrichtungen führt jedenfalls regelmäßig dazu, dass die Antriebskomponenten der elektrischen Antriebsvorrichtungen, beispielsweise Antriebslager oder die Isolation von Spulenanordnungen, relativ starke thermische Belastungen ertragen müssen, wodurch die elektrischen Antriebsvorrichtungen sozusagen aus thermischer Sicht insgesamt relativ hoch Beansprucht sind.

Durch die thermische Beanspruchung kann, insbesondere über die wünschenswerterweise relativ hohe Lebensdauer/Standzeit der elektrischen Antriebsvorrichtungen betrachtet, der Wirkungsgrad der elektrischen Antriebsvorrichtungen spürbar verschlechtert werden, beispielsweise infolge einer höheren Stromaufnahme oder durch eine höhere Lagerreibung. Ferner kann die erwähnte Lebensdauer/Standzeit insgesamt herabgesetzt sein, weil beispielsweise die Antriebskomponenten der elektrischen Antriebsvorrichtung thermisch verschleißen.

Obwohl die bekannten elektrischen Antriebsvorrichtungen zur Überwindung des thermischen Problems über Wärmetauschereinrichtungen verfügen, beispielsweise sei an dieser Stelle auf die in der Druckschrift DE 10 2005 052 363 A1 beschriebene Mantel-Kühleinrichtungen verweisen, ist es wünschenswert, die thermische Belastung der elektrischen Antriebsvorrichtungen weiter zu reduzieren, um insbesondere die Lebensdauer/Standzeit von elektrischen Antriebsvorrichtungen weiter zu erhöhen, so dass im Ergebnis beispielsweise noch langlebigere Antriebsvorrichtung bereitstellbar sind.

Vor diesem Hintergrund liegt die Aufgabe der Erfindung darin, eine verbesserte oder zumindest eine andere Ausführungsform für eine elektrische Antriebsvorrichtung bereitzustellen.

Darüber hinaus besteht die Aufgabe der Erfindung auch darin, ein Herstellungsverfahren für eine Wärmetauschereinrichtung, insbesondere für eine solche elektrische Antriebsvorrichtung, anzugeben.

Bei der vorliegenden Erfindung werden die Aufgaben insbesondere durch die Gegenstände der unabhängigen Ansprüche gelöst. Vorteilhafte Ausführungsformen sind Gegenstand der abhängigen Ansprüche.

Der Grundgedanke der Erfindung basiert auf der innovativen Überlegung, sozusagen die Kühlleistung der aus dem Stand der Technik bekannten Wärmetauschereinrichtungen zu erhöhen. Während die bekannten Wärmetauschereinrichtungen üblicherweise darauf setzen, die im Betrieb der elektrischen Antriebsvorrichtung entstehende Wärmeverlustenergie am Statorgehäuse oder in der Nähe des Statorgehäuses abzugreifen, schlägt die vorliegenden Erfindung vor, die Wärmeverlustenergie unmittelbar, also sozusagen direkt, an den für die Wärmeverlustenergie verantwortlichen Antriebskomponenten der elektrischen Antriebsvorrichtung abzugreifen. Dabei liegen die die Wärmeverlustenergie abführenden Komponenten der vorgeschlagenen Wärmetauschereinrichtungen zweckmäßigerweise unmittelbar und insbesondere spaltfrei an den für die Wärmeverlustenergie verantwortlichen Antriebskomponenten der elektrischen Antriebsvorrichtung an, also so, dass zwischen diesen Komponenten kein unnötiger Zwischenraum vorhanden ist.

Zur Realisierung dieser Idee ist vorgesehen, dass die elektrische Antriebsvorrichtung, die exemplarisch im Bereich der Kraftfahrzeugtechnik eingesetzt werden kann, mit einem Elektromotor ausgestattet ist, der eine Statoranordnung und eine Ankeranordnung aufweist. Ferner verfügt die elektrische Antriebsvorrichtung über einen Gehäusedeckel und ein vom Gehäusedeckel verschließbares Gehäuse, das der Aufnahme der Statoranordnung dient. Beispielsweise sind der Gehäusedeckel und das Gehäuse aus einem Metallwerkstoff oder seltener aus einem Kunststoffwerkstoff hergestellt. Jedenfalls deckt der Gehäusedeckel das Gehäuse ab, um beispielsweise die nachfolgend beschriebenen, im Gehäuse angeordneten, Antriebskomponenten vor Umwelteinflüssen zu schützen.

Am Gehäuse ist eine Rotorachse angeordnet, die längs ihres vorzugsweise kreiszylindrischen Rotorkörpers eine Drehlängsachse definiert. Die Rotorachse ist fest am Gehäuse fixiert und insbesondere einstückig mit dem Gehäuse ausgebildet. Zweckmäßigerweise kann die Rotorachse am Gehäusedeckel angreifen, beispielsweise über eine am Gehäusedeckel angeordnete Lager- und/oder Fixieranordnung.

An der Rotorachse ist ein um die Drehlängsachse rotierbar angeordneter Rotor zur Aufnahme der Ankeranordnung vorgesehen. Der Rotor kann beispielsweise von topfförmiger Gestalt sein und eine Topfaufnahme definieren, um die Aufnahme und/oder das Fixieren der Ankeranordnung zu unterstützen. Die Ankeranordnung umfasst beispielsweise eine Permanentmagnetanordnung.

Die vorliegende Erfindung lässt sich natürlich auch auf Elektromotoren anwenden, deren Ankeranordnung und Statoranordnung sozusagen vertauscht angeordnet sind, also auf Elektromotoren, deren Ankeranordnung am Gehäuse angeordnet und deren Statoranordnung am Rotor angeordnet ist. Mit anderen Worten, die vorliegende Erfindung lässt sich auf Innen- und Außenläufer-Elektromotoren anwenden.

Die Statoranordnung umfasst ein oder mehrere Statorantriebsmittel, die jeweils an einem Bestückungsabschnitt der Statoranordnung angeordnet sind. Die Statorantriebsmittel erstrecken sich längs der Drehlängsachse. Die einzelnen Statorantriebsmittel bilden dabei im Gesamten die Statoranordnung und umfassen exemplarisch jeweils eine Spulenwicklungsanordnung. Die Statorantriebsmittel können einzeln oder zusammen mittels einer Elektromotor-Steuereinrichtung betrieben werden.

Weiterhin umfasst die Statoranordnung einen oder mehrere Kanalführungsabschnitte, die zweckmäßigerweise zwischen den Bestückungsabschnitten angeordnet sind. Ein Kanalführungsabschnitt bildet sozusagen einen freien Spalt zwischen zwei benachbarten Bestückungsabschnitten. Beispielsweise sind die Kanalführungsabschnitte und die Bestückungsabschnitten in einer Aufreihungsrichtung aneinander alternierend angeordnet, wobei die Aufreihungsrichtung insbesondere durch eine quer oder orthogonal zur Drehlängsachse orientierte Umfangsrichtung definiert sein kann.

Wesentlich ist, dass die elektrische Antriebsvorrichtung eine Wärmetauschereinrichtung zum Austauschen von Wärmeverlustenergie zwischen der Statoranordnung und/oder der Ankeranordnung einerseits und einem Wärmetauscherfluid andererseits umfasst. Zweckmäßigerweise handelt es sich bei dem Wärmetauscherfluid um Wasser oder ein Wasser-Glykol-Gemisch, das sozusagen als Wärmeträger fungiert.

Die Wärmetauschereinrichtung umfasst ihrerseits ein von dem Wärmetauscherfluid durchströmbares Fluidkanalsystem, das wenigstens einen Fluidkanal oder einen Satz von Fluidkanälen aufweist, die sich insbesondere längs oder parallel der Drehlängsachse durch die Statoranordnung erstrecken, insbesondere teilweise oder vollständig. Jeder Fluidkanal liegt dabei an wenigstens einer quer oder einer radial bezüglich der Drehlängsachse orientierten Statorantriebsmittel-Mantelfläche eines Statorantriebsmittels berührend, also spaltfrei, an.

Diese Gestaltung hat den überraschenden Effekt, dass die Wärmeverlustenergie praktisch vollständig durch Wärmeleitung (Wärmekonduktion) und somit nur teilweise oder praktisch gar nicht über Wärmekonvektion erfolgt. Das hat den Vorteil, dass die in der Antriebsvorrichtung bereitgestellte Wärmeverlustenergie relativ rasch auf ein Wärmetauscherfluid übertragen und anschließend aus der elektrischen Antriebsvorrichtung abgeführt werden kann, beispielweise zu einem Wärmetauscherfluid-Kühler. Das hat ferner den Vorteil, dass mit der vorgeschlagenen Wärmetauscheranordnung ausgestattete Antriebsvorrichtungen eine relativ hohe Lebensdauer/Standzeit erreichen können.

Die elektrischen Antriebsvorrichtungen können im Vergleich mit herkömmlichen elektrischen Antriebsvorrichtungen also relativ kühl gehalten werden, so dass man auch sagen kann, dass der Wärmehaushalt der elektrischen Antriebsvorrichtungen optimiert ist.

Zweckmäßig ist die elektrische Antriebsvorrichtung mit Fluidkanälen ausgerüstet, die zweckmäßigerweise aus Kunststoffmaterial hergestellt sind, insbesondere aus einem Thermoplastmaterial.

Jeder oder wenigstens ein Fluidkanal liegt flächig oder vollflächig und/oder spaltfrei an einer der Statorantriebsmittel-Mantelflächen berührend an. Das hat den Effekt, dass zwischen den Fluidkanälen oder den Fluidmantelflächen der Fluidkanäle und den Statorantriebsmittel oder den Statorantriebsmittel-Mantelflächen kein unnötiger, beispielsweise mit Luft gefüllter, Zwischenspalt vorhanden ist. Dadurch wird die Wärmeleitung, insbesondere Wärmekonduktion, von den Statorantriebsmitteln hin zu den von Wärmetauscherfluid durchströmten Fluidkanälen verbessert, weil die in den Statorantriebsmitteln zwangsweise im Betrieb der elektrischen Antriebsvorrichtungen erzeugte Wärmeverlustenergie direkt abgeführt werden kann und nicht, wie seither insbesondere durch Wärmekonvektion abgeführt wird. Dadurch wird erreicht, dass die Wärmeverlustenergie relativ zügig von den Statorantriebsmitteln hin zum Wärmetauscherfluid geführt werden kann, so dass die elektrische Antriebsvorrichtung insgesamt relativ kühl bleibt, auch wenn sie im Betrieb ein hohes Antriebsmoment und eine hohe Antriebsleistung bereitstellt. Das hat weiterhin den Vorteil, dass die Antriebskomponenten der elektrischen Antriebsvorrichtungen einer geringeren thermischen Belastung ausgesetzt sind, so dass im Ergebnis die Lebensdauer/Standzeit der elektrischen Antriebsvorrichtungen, die mit einer solchen Wärmetauschereinrichtung ausgestattet sind, spürbar erhöht ist.

Um zu erreichen, dass die Wärmeverlustenergie noch zügiger von den Statorantriebsmittel hin zum Wärmetauscherfluid geführt werden kann, wird bevorzugt, dass einer oder jeder Fluidkanal flächig oder vollflächig und/oder spaltfrei an mindestens einem Statorantriebsmittel-Mantelflächen-Umfangsabschnitt einer der Statorantriebsmittel-Mantelflächen anliegt. Ein oder jeder Statorantriebsmittel-Mantelflächen-Umfangsabschnitt ist zwischen einem Bestückungsabschnitt einerseits und einem Kanalführungsabschnitt andererseits grenzartig angeordnet, zweckmäßigerweise weisen die Statorantriebsmittel-Mantelflächen-Umfangsabschnitte jeweils eine Flächennormale auf, die in einer Umfangsrichtung um die Drehlängsachse orientiert sind.

Insbesondere ist es von Vorteil, wenn eine Fluidkanalquerschnittsfläche eines oder jedes Fluidkanals mit einer Querschnittfläche eines Kanalführungsabschnitts flächenmäßig deckungsgleich ist, weil dann die gesamte zur Verfügung stehende Fläche zwischen zwei die Statorantriebsmittel aufweisenden Bestückungsabschnitten von einem Fluidkanal zur Führung des Wärmetauscherfluids genutzt werden kann. Dadurch kann die elektrische Antriebsvorrichtung noch effektiver gekühlt werden.

Vorzugsweise ist jede Statorantriebsmittel-Mantelfläche oder jeder Statorantriebsmittel-Mantelflächen-Umfangsabschnitt eines Statorantriebsmittels von einer Spulenwindungsoberfläche gebildet. Die Spulenwindungsoberflächen können von einer an dem jeweiligen Bestückungsabschnitt angeordneten Spulenwindungsanordnung gebildet sein, wobei die Spulenwindungsanordnungen zweckmäßigerweise aus einer Mehrzahl von insbesondere quer oder längs zur Drehlängsachse orientierten Spulenwindungen gebildet sind.

Zweckmäßigerweise ist die Spulenwindungsoberfläche einer Spulenwindungsanordnung durchgängig wellenförmig und weist eine Spulenoberflächenkontur auf, die sich parallel der Drehlängsachse oder quer zur Drehlängsachse aus sich aneinander reihenden bogenförmigen spitzwinkelig ineinander übergehende Bogenabschnitten zusammensetzt. Die Fluidkanäle des ersten Satzes sind dabei zweckmäßigerweise spaltfrei komplementär an den Spulenoberflächenkonturen der Spulenwindungsanordnungen angelegt, so dass die Fluidkanäle des ersten Satzes eine Art Negativ-Spulenoberflächenkontur bilden, die beispielsweise wie eine Sägezahnkontur aussieht.

Die Fluidkanäle erstrecken sich jeweils vorzugsweise teilweise oder vollständig durch die Statoranordnung oder einen Kanalführungsabschnitt der Statoranordnung in Richtung der Drehlängsachse, so dass sie jeweils eine relativ große Länge aufweisen.

Es ist möglich, dass mehrere Kanalführungsabschnitte und mehrere Bestückungsabschnitte in einer Umfangsrichtung um die Drehlängsachse herum alternierend angeordnet sind, wobei jeder Kanalführungsabschnitt einen Fluidkanal und jeder Bestückungsabschnitt ein Statorantriebsmittel aufweist. Einzelne Statorantriebsmittel sind daher sozusagen in Umfangsrichtung zu beiden Seiten hin durch jeweils einen Kanalführungsabschnitt voneinander getrennt.

Weil in den Kanalführungsabschnitten jeweils ein Fluidkanal angeordnet ist, kann ein dazwischenliegendes Statorantriebsmittel von zwei Seiten her gekühlt werden, so dass Wärmeverlustenergie von zwei Seiten her abgeführt und dem durch die Fluidkanäle strömenden Wärmetauscherfluid zugeführt werden kann.

Grundsätzlich ist denkbar, dass in einem Kanalführungsabschnitt jeweils zwei oder mehr Fluidkanäle angeordnet sind, die aneinander und an den Bestückungsabschnitten flächig angelegt sind.

Weiterhin kann das Fluidkanalsystem wenigstens eine Fluidzulauföffnung und wenigstens eine Fluidablauföffnung umfassen, durch die hindurch Wärmetauscherfluid in wenigstens einen Fluidkanal strömen kann. Dies hat den Effekt, dass das Fluidkanalsystem der Wärmetauschereinrichtung mit Wärmetauscherfluid versorgt werden kann. Für die Versorgung mit Wärmetauscherfluid eignet sich beispielsweise eine Versorgungseinrichtung oder dergleichen. Jedenfalls ist die Versorgungseinrichtung beispielsweise mittels Versorgungschläuchen mit der Fluidzulauföffnung und/oder mit der Fluidablauföffnung verbindbar, so dass beispielsweise Wärmetauscherfluid ausgehend von der Versorgungseinrichtung in das Fluidkanalsystem der Wärmetauschereinrichtung gepumpt werden kann. Die elektrische Antriebsvorrichtung kann dadurch von Wärmetauscherfluid durchströmt werden. Die Versorgungseinrichtung kann ihrerseits zweckmäßigerweise mit einer Kühleinrichtung verbunden sein, beispielsweise mit einer weiteren

Wärmetauschereinrichtung, die das erwärmte Wärmetauscherfluid kühlt.

Vorzugsweise ist zwischen einer Fluidzulauföffnung des Fluidkanalsystems und wenigstens einem Fluidkanal und/oder zwischen einer Fluidablauföffnung des Fluidkanalsystems und wenigstens einem Fluidkanal jeweils ein Fluidreservoir angeordnet. Der Begriff Fluidreservoir bedeutet im Rahmen dieser Beschreibung, dass ein Fluidvorrat gebildet ist, der Wärmetauscherfluid bevorraten kann. Mit anderen Worten, kann mittels des oder der Fluidreservoire ein vorgegebenes oder vorgebbares Fluidvolumen insbesondere ein Wärmetauscherfluidvolumen innerhalb des Fluidkanalsystems zwischengespeichert werden, um beispielsweise eine ungleichmäßige Versorgung seitens der Versorgungseinrichtung auszugleichen. Das hat den Vorteil, dass das Fluidkanalsystem und/oder die Wärmetauschereinrichtung in jedem Fall mit Wärmetauscherfluid versorgt sind, so dass eine Kühlung der elektrischen Antriebsvorrichtung gewährleistet werden kann.

Bevorzugt ist es, wenn ein Fluidkanal einen Zulaufkanal und einen Rücklaufkanal umfasst, die jeweils aus einem Kunststoffmaterial, insbesondere aus einem Thermoplastmaterial, hergestellt sein können.

Dabei können der Zulaufkanal und der Rücklaufkanal jeweils von hohlzylindrischer Gestalt sein und einen kreisringartigen, runden, ovalen oder vieleckigen Querschnitt bezogen auf eine Hauptausdehnungsrichtung aufweisen. Ein Zulaufkanal und ein Rücklaufkanal können jeweils von einem dünnwandigen Rohrkanalkörper gebildet sein. In diesem Zusammenhang ist nachfolgend auch die Rede von Fluidkanälen eines ersten Satzes und eines zweiten Satzes, wobei die Fluidkanäle des ersten Satzes durch die Zulaufkanäle und die Fluidkanäle des zweiten Satzes durch die Rücklaufkanal definiert sind oder umgekehrt.

Im Betrieb der elektrischen Antriebsvorrichtung können ein oder mehrere Zulaufkanäle an einem ersten Kanalflansch und ein oder mehrere Rücklaufkanäle an einem zweiten Kanalflansch jeweils winkelig, insbesondere rechtwinkelig, angeordnet sein. Praktischerweise sind die Zulaufkanäle und die Rücklaufkanäle dabei entlang eines am jeweiligen Kanalflansch angeordneten imaginären Kanalflansch-Kreisrings mit gegenseitigem Abstand zueinander am jeweiligen Kanalflansch angeordnet.

Ferner ist im Betrieb der elektrischen Antriebsvorrichtung vorgesehen, dass die am zweiten Kanalflansch angeordneten Rücklaufkanäle in die am ersten Kanalflansch angeordneten Zulaufkanäle eingesetzt oder eingesteckt sind. Dabei ist zwischen den Zulaufkanälen und den Rücklaufkanälen jeweils ein von Wärmetauscherfluid durchströmbarer Fluidkanalringraum, der sich in Richtung der Drehlängsachse erstreckt und ein Fluidreservoir definiert, und ein Überströmraum gebildet. Der Überströmraum ermöglicht es, dass das Wärmetauscherfluid vom Zulaufkanal in den Rücklaufkanal strömen kann, wobei der Zulaufkanal und der Rücklaufkanal sozusagen in den Überströmraum münden, so dass ein durch den Zulaufkanal heranströmendes Wärmetauscherfluid durch den Überströmraum hindurch in den Rücklaufkanal überströmen kann. Durch die Überströmräume wird erreicht, dass ein vorgegebenes oder vorgebbares Wärmetauscherfluidvolumen zwischen gespeichert werden kann.

Zweckmäßigerweise definiert der Zulaufkanal eine Zulauflängsachse und der Rücklaufkanal eine Rücklauflängsachse, wobei die Zulauflängsachse und die Rücklauflängsachse im Betrieb der elektrischen Antriebsvorrichtung praktisch parallel oder parallel und insbesondere koaxial zueinander angeordnet sind.

Jedenfalls kann zwischen einer Fluidzulauföffnung des Fluidkanalsystems und einem Zulaufkanal und/oder zwischen einer Fluidablauföffnung des Fluidkanalsystems und einem Rücklaufkanal jeweils ein Fluidreservoir angeordnet sein. Zweckmäßigerweise sind die Kanalflansche vorzugsweise aus einem Kunststoffmaterial hergestellt, insbesondere aus einem Thermoplastmaterial, zweckmäßigerweise aus demselben Material wie die Fluidkanäle.

Insbesondere können der erste Kanalflansch und der zweite Kanalflansch im Betrieb der Antriebsvorrichtung stoff-, kraft- oder formschlüssig berührend aneinander anliegen, wobei zwischen dem ersten Kanalflansch und dem zweiten Kanalflansch das Fluidreservoir ausgebildet ist.

Die Erfindung umfasst den weiteren Grundgedanken, ein Herstellverfahren für eine Wärmetauschereinrichtung anzugeben, insbesondere zur Verwendung bei einer elektrischen Antriebsvorrichtung, wie sie vorstehend beschrieben ist.

Das vorgeschlagene Herstellverfahren umfasst dazu mehrere Schritte, nämlich gemäß einem ersten Schritt das Einsetzen eines ersten Satzes von aus einem Kunststoffmaterial, insbesondere einem Thermoplastmaterial, hergestellten Fluidkanal-Rohlingen in eine Statoranordnung der elektrischen Antriebsvorrichtung. Der erste Satz von Fluidkanal-Rohlingen umfasst dabei wenigstens einen oder mehrere Fluidkanal-Rohlinge, die exemplarisch hohlzylindrische Rohkunststoffkörper mit einem runden, ovalen oder vieleckigen Querschnitt bezogen auf ihre Hauptausdehnungsrichtung sind. Jedenfalls werden die Fluidkanal-Rohlinge vorzugsweise in freie Kanalführungsabschnitte der Statoranordnung eingesetzt. Die Kanalführungsabschnitte sind zweckmäßigerweise zwischen Bestückungsabschnitten zum Aufnehmen von Statorantriebsmittel der Statoranordnung angeordnet; sie grenzen also die Bestückungsabschnitte gegenseitig zumindest in einer Umfangsrichtung ab. Die Kanalführungsabschnitte und die Bestückungsabschnitten können beispielsweise in einer Umfangsrichtung um die Drehlängsachse des Rotorkörpers herum aneinander alternierend angeordnet sein.

Man kann sich beispielsweise vorstellen, dass alle Fluidkanal-Rohlinge des ersten Satzes gemeinsam in die freien Kanalführungsabschnitte eingesetzt oder eingeschoben werden, wobei sie beispielsweise an einem oder zwei die Kanalführungsabschnitte voneinander trennenden Bestückungsabschnitten zunächst punkt oder linienförmig anliegen. Das hat den Effekt, dass die Fluidkanal-Rohlinge relativ einfach an der Statoranordnung angeordnet werden können, beispielsweise im Rahmen eines automatisierten Einschiebevorgangs.

Gemäß einem zweiten Schritt ist vorgesehen, dass die Fluidkanal-Rohlinge des ersten Satzes erwärmt werden. Die Erwärmung erfolgt zweckmäßigerweise bis die Fluidkanal-Rohlinge jeweils über ihre jeweilige Glasübergangstemperatur erwärmt sind. Dabei kann die Glasübergangstemperatur ganz unterschiedlich ausfallen, ganz in Abhängigkeit des verwendeten Kunststoffmaterials, insbesondere bei einem Thermoplastmaterial. Beispielsweise sind für teilkristalline Thermoplasten Glasübergangstemperaturbereiche von etwa -50 °C bis hin zu etwa 150 °C bekannt. Ferner sind beispielsweise für amorphe Thermoplasten Glasübergangstemperaturbereiche von etwa 80 °C bis hin zu etwa 225 °C bekannt. Ferner sind beispielsweise für amorphe Thermoplasten Glasübergangstemperaturbereiche von etwa 80 °C bis hin zu etwa 225 °C bekannt. Weitere Glasübergangstemperaturen sind beispielswiese für Polyamid 66 (PA66), 47°C bis 258°C, für Polyamid 6 (PA6) 60°C bis 220°C und für Polypropylen (PP) 0°C bis 165°C.

Jedenfalls hat dieses Vorgehen den Zweck, die aus Kunststoffmaterial hergestellten Fluidkanal-Rohlinge des ersten Satzes weich und formbar zu machen, so dass in einem anschließenden Schritt eine Druckbeaufschlagen, insbesondere eine Innendruckbeaufschlagung, der Fluidkanal-Rohlinge des ersten Satzes erfolgen kann. Weil die Fluidkanal-Rohlinge des ersten Satzes erwärmt und deshalb relativ weich und formbar sind, weiteten sie sich jeweils bezüglich ihrer Hauptausdehnungsrichtung im Rahmen der Druckbeaufschlagung radial oder quer auf. Vergleicht man eine bezüglich der Hauptausdehnungsrichtung eines Fluidkanal-Rohlings quer orientierte Fluidkanalquerschnittsfläche eines oder jedes Fluidkanal-Rohlings des ersten Satzes vor dem Erwärmen und Beaufschlagen mit Innendruck mit einer Fluidkanalquerschnittsfläche eines oder jedes Fluidkanal-Rohlings des ersten Satzes nach dem Erwärmen und Beaufschlagen mit Innendruck, so kann man feststellen, dass die jeweiligen Fluidkanalquerschnittflächen sozusagen flächenmäßig an Größe gewonnen haben.

Zweckmäßigerweise füllen die Fluidkanalquerschnittflächen der Fluidkanal-Rohlinge die jeweilige Querschnittsfläche eines Kanalführungsabschnittes vollständig, so dass man sagen könnte, dass Fluidkanalquerschnittflächen praktisch identisch oder deckungsgleich mit den jeweiligen Querschnittsflächen der Kanalführungsabschnitte sind.

Ferner kann in einem weiteren Schritt vorgesehen sein, die Druckbeaufschlagung der Fluidkanal-Rohlinge des ersten Satzes über eine vorgegebene oder vorgebbare Zeitspanne aufrechtzuerhalten. Dadurch wird erreicht, dass die Fluidkanal-Rohlinge des ersten Satzes maximal radial geweitet werden können, wodurch Fluidkanal-Rohling-Mantelflächen der Fluidkanal-Rohlinge des ersten Satzes an Statorantriebsmittel-Mantelflächen von Statorantriebsmitteln der Statoranordnung flächig berührend und zweckmäßigerweise spaltfrei und zweckmäßigerweise vollständig flächig berührend anlegbar sind.

Gemäß einem fünften Schritt ist ein Abkühlvorgang vorgesehen, in dessen Rahmen die Fluidkanal-Rohlinge des ersten Satzes abkühlen. Beispielsweise kann während dieses Schrittes der Innendruck in den Fluidkanal-Rohlingen des ersten Satzes aufrechterhalten werden. Dadurch wird der Vorteil erzielt, dass die Fluidkanal-Rohlinge des ersten Satzes nicht in ihre Ausgangsform zurückfedern. Ferner ist in einem sechsten Schritt vorgesehen, dass an die nun vollständig oder zumindest teilweise abgekühlten Fluidkanal-Rohlinge des ersten Satzes, die man nun auch als Fluidkanäle des ersten Satzes oder einfach nur als Fluidkanäle bezeichnen könnte, ein erster Kanalflansch angespritzt wird. Der erste Kanalflansch besteht beispielsweise auch aus einem Kunststoffmaterial, beispielsweise aus dem gleichen Kunststoffmaterial, wie die Fluidkanal-Rohlinge des ersten Satzes, vorzugsweise aus einem Thermoplastmaterial. An der Statoranordnung ist damit sozusagen ein integrales erstes Kanalflansch-Fluidkanal-Bauteil ausgebildet.

Nach dem Anordnen des ersten Kanalflansches an den Fluidkanal-Rohlingen des ersten Satzes, ist im Rahmen eines siebten Schrittes vorgesehen, einen zweiten Satz von Fluidkanal-Rohlingen bereitzustellen, die jeweils im Querschnitt kleiner sind, als die Fluidkanal-Rohlinge des ersten Satzes.

Die Fluidkanal-Rohlinge des zweiten Satzes sind ebenfalls aus einem Kunststoffmaterial, insbesondere einem Thermoplastmaterial, hergestellt. Wie der erste Satz von Fluidkanal-Rohlingen, umfasst auch der zweite Satz von Fluidkanal-Rohlingen wenigstens einen oder mehrere Fluidkanal-Rohlinge, die jeweils einen hohlzylindrischen Rohkunststoffkörper mit einem runden, ovalen oder vieleckigen Querschnitt bezogen auf die jeweilige Hauptausdehnungsrichtung aufweisen.

Ferner werden die Fluidkanal-Rohlinge des zweiten Satzes an einem zweiten Kanalflansch angeordnet, der ebenfalls aus einem Kunststoffmaterial, insbesondere einem Thermoplastmaterial, hergestellt ist. Die Anordnung der Fluidkanal-Rohlinge des zweiten Satzes am zweiten Kanalflansch ist so gewählt, dass die Fluidkanal-Rohlinge des zweiten Satzes in den ersten Satz von Fluidkanal-Rohlingen gesteckt oder geschoben werden können.

Es ist noch zu erwähnen, dass die Anordnung der Fluidkanal-Rohlinge an den jeweiligen Kanalflanschen wahlweise kraft-, form- oder stoffschlüssig sein kann.

Nachdem die Fluidkanal-Rohlinge des zweiten Satzes an dem zweiten Kanalflansch angeordnet sind bilden sie sozusagen ein integrales zweites Kanalflansch-Fluidkanal-Bauteil, das in das erste Kanalflansch-Fluidkanal-Bauteil einsteckbar ist. Die Kanalflansch-Fluidkanal-Bauteile können dabei so aneinander angeordnet werden, dass der zweite Satz von Fluidkanal-Rohlingen ringsum mit Abstand in den ersten Satz von Fluidkanal-Rohlingen hineinragt. Die beiden Kanalflansche liegen dabei zweckmäßigerweise berührend aneinander an und sind miteinander kraft-, form- oder stoffschlüssig verbunden.

In einem letzten Schritt ist vorgesehen, die beiden Kanalflansche aneinander lösbar oder unlösbar zu fixieren.

Durch das Herstellungsverfahren wird der Vorteil erreicht, dass die vorgeschlagene elektrische Antriebsvorrichtung und/oder die vorgeschlagene Wärmetauschereinrichtung relativ günstig herstellbar sind, beispielsweise im Rahmen einer automatisierten Herstellung.

Die Fluidkanäle können selbstverständlich integraler Bestandteil eines Kanalflansches sein, also sozusagen einstückig mit dem Kanalflansch ausgebildet sein, so dass insgesamt ein Fluidkanal-Kanalflansch-Bauteil gebildet ist. Zweckmäßigerweise kann vorgesehen sein, dass die Fluidkanäle jeweils als separate Teile gestaltet sind.

Zusammenfassend bleibt festzuhalten: Die vorliegende Erfindung betrifft bevorzugt eine elektrische Antriebsvorrichtung mit einem Elektromotor, der eine Statoranordnung und eine Ankeranordnung aufweist, wobei die Statoranordnung einen oder mehrere sich längs der Drehlängsachse erstreckende Bestückungsabschnitte zum Bestücken mit Statorantriebsmitteln und einen oder mehrere sich längs der Drehlängsachse erstreckende Kanalführungsabschnitte umfasst. Die Antriebsvorrichtung umfasst ferner eine Wärmetauschereinrichtung zum Austauschen von Wärmeverlustenergie zwischen der Statoranordnung und/oder der Ankeranordnung einerseits und einem Wärmetauscherfluid andererseits, wobei die Wärmetauschereinrichtung ein von dem Wärmetauscherfluid durchströmbares Fluidkanalsystem umfasst, das wenigstens einen Fluidkanal aufweist. Der Fluidkanal erstreckt sich dabei längs durch die Statoranordnung, wobei jeder Fluidkanal an wenigstens einer Statorantriebsmittel-Mantelfläche eines Statorantriebsmittels berührend anliegt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: ein Längsschnitt einer bevorzugten elektrischen Antriebsvorrichtung,
- Fig. 2: ein Querschnitt der elektrischen Antriebsvorrichtung aus Fig. 1 gemäß einer dort punktierten Schnittlinie II-II,
- Fig. 3: eine perspektivische Ansicht einer an einer Statoranordnung angeordneten Wärmetauschereinrichtung einer elektrischen Antriebsvorrichtung,
- Fig. 4: eine perspektivische Ansicht der Wärmetauschereinrichtung aus Fig. 3, wobei die Statoranordnung zu Gunsten der Erkennbarkeit der Wärmetauschereinrichtung entfernt ist,
- Fig. 5: eine Schnittansicht der Wärmetauschereinrichtung aus Fig. 4 gemäß einer dort durch Pfeile V-V angedeuteten Schnittebene, wobei zu Gunsten der Erkennbarkeit lediglich die obere Hälfte der Wärmetauschereinrichtung vergrößert dargestellt ist,
- Fig. 6: die Schnittansicht der Wärmetauschereinrichtung aus Fig. 5, allerdings in einem Auseinanderbauzustand,
- Fig. 7: in einer perspektivischen Ansicht zwei aneinander angeordnete Kanalflansche aus Fig. 4 gemäß einem Pfeil VII aus Fig. 4, allerdings ohne daran angeordnete Fluidkanäle,
- Fig. 8 und 9: jeweils in einer perspektivischen Ansicht einen einzelnen Kanalflansch aus Fig. 4 gemäß den Pfeilen VIII und IX aus Fig. 6.

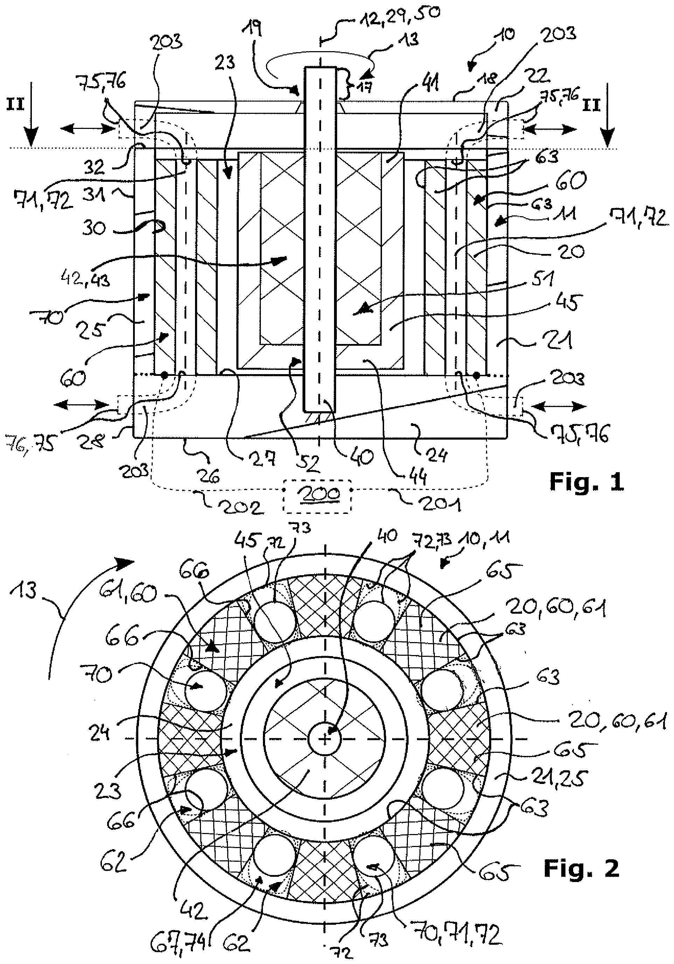

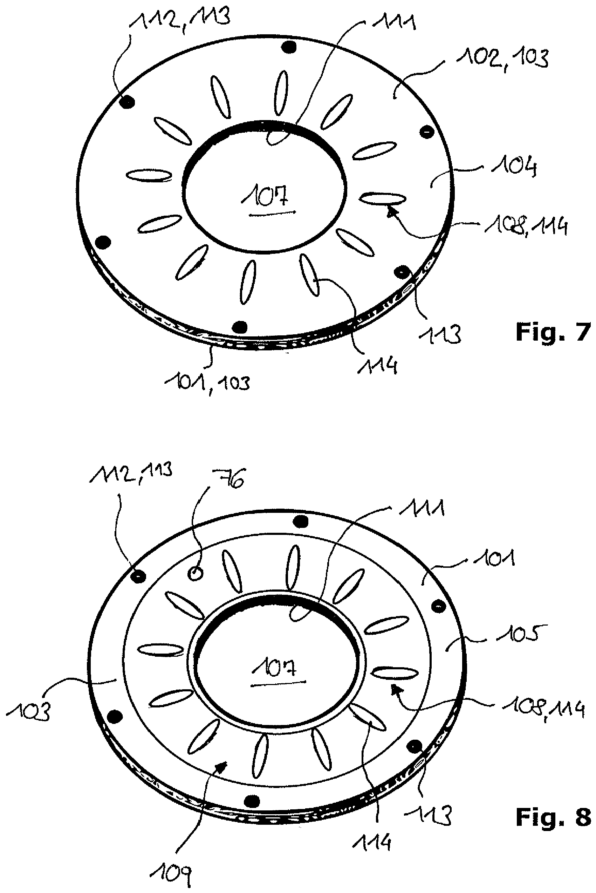

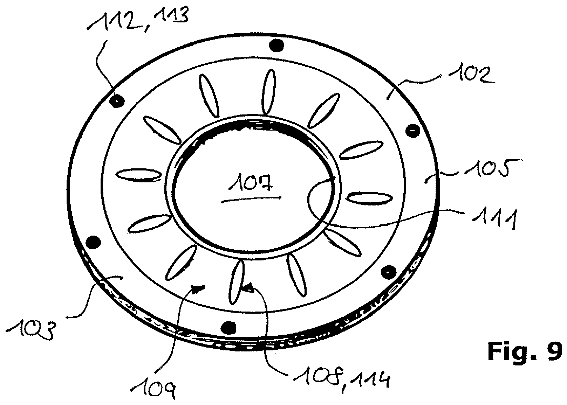

Die Figuren 1 bis 9 zeigen eine bevorzugte Ausführungsform einer elektrischen Antriebsvorrichtung 10, die wenigstens einen Elektromotor 11 umfasst, der eine Statoranordnung 20 und eine Ankeranordnung 42 aufweist.

Die Statoranordnung 20 ist in einem Gehäuse 21 angeordnet, dass zur Aufnahme der Statoranordnung 20 dient. Das Gehäuse 21 ist beispielsweise von einem Gehäusedeckel 22 verschließbar, insbesondere fluiddicht verschließbar. Dadurch kann das Innenleben des Elektromotors 11 beispielsweise von Umwelteinflüssen oder dergleichen geschützt werden, so dass eine insgesamt relativ langlebige elektrische Antriebsvorrichtung 10 bereitgestellt werden kann.

Antriebsvorrichtungen 10, insbesondere elektrische Antriebsvorrichtungen 10, werden vorzugsweise im Bereich der Kraftfahrzeugtechnik oder anderen technischen Gebieten eingesetzt, um ein Antriebsmoment und eine Antriebsbewegung bereitzustellen. Beispielsweise werden derartige Antriebsvorrichtungen 10 gerne zum Antreiben eines in der Zeichnung nicht dargestellten Stellglieds herangezogen. Bei den Stellgliedern kann es sich um Ventile, Wastegate-Ventile, Drosselklappen oder sogar Scheibenwischer handeln.

Das Gehäuse 21 ist zweckmäßigerweise von topfartiger Gestalt und begrenzt eine Topfaufnahme 23, die zum Aufnehmen der Statoranordnung 20 dient. Das Gehäuse 21 weist beispielsweise einen Gehäuseboden 24 und eine Gehäusewand 25 auf, wobei der Gehäuseboden 24 und die Gehäusewand 25 beispielsweise jeweils aus einem Metallmaterial oder einem Kunststoffmaterial hergestellt sein können. Jedenfalls hat der Gehäuseboden 24 exemplarisch eine Gehäusebodenrückfläche 26 und eine dazu entgegengesetzt orientierte Gehäusebodenvorderfläche 27, wobei die Gehäusebodenrückfläche 26 und die Gehäusebodenvorderseite 27 insbesondere zwei zueinander parallel ausgerichtete Großflächen sind.

Der Gehäuseboden 24 weist ferner eine ihn nach außen hin radial abschließende Gehäuseboden-Mantelfläche 28 auf. Der Gehäuseboden 24 ist weiterhin vorzugsweise von zylindrischer Gestalt, in der Art, dass die Gehäusebodenrückfläche 26 und die Gehäusebodenvorderseite 27 einen Zylinderkörper bilden, der zweckmäßigerweise von runder, ovaler oder vieleckiger Gestaltet sein kann. Die Gehäusebodenrückfläche 26 und die Gehäusebodenvorderseite 27 können rund, ovalen oder vieleckige Großflächen sein.

Jedenfalls ragt von dem Gehäuseboden 24 die beschriebene Gehäusewand 25 weg, so dass zwischen dem Gehäuseboden 24 und der Gehäusewand 25, vorzugsweise zwischen einer Gehäusewand-Innenmantelfläche 30 der Gehäusewand 25 und der Gehäusebodenvorderseite 27 des Gehäusebodens 24, die Topfaufnahme 23 gebildet ist.

Weiter zweckmäßigerweise verfügt die Gehäusewand 25 über eine sie in radialer Richtung nach außen hin abschließende Gehäusewand-Außenmantelfläche 31. Nach oben hin schließt die Gehäusewand 25 unter Ausbildung einer Gehäusewand-Stirnfläche 32 ab.

Wie in Fig. 1 zu erkennen ist, definiert das kreisrunde, ovale oder vieleckige zylindrische Gehäuse 21 eine Gehäuselängsachse 29, bezüglich der die Gehäusewand 25 und/oder die Gehäusewand-Innenmantelfläche 30 vorzugsweise äquidistant ist. In diesem Zusammenhang ist es auch möglich und von Vorteil, wenn die Gehäusewand-Außenmantelfläche 31 parallel zur Gehäuselängsachse 29 angeordnet ist und sowohl die Gehäusebodenrückfläche 26 als auch die Gehäusebodenvorderfläche 27 orthogonal bezüglich der Gehäuselängsachse 29 orientiert sind. Auf diese Weise kann ein vorteilhaftes topfförmiges Gehäuse 21 zur Aufnahme der Statoranordnung 20 bereitgestellt werden.

Jedenfalls ist denkbar, dass die Gehäusewand-Stirnfläche 32 zur Aufnahme des erwähnten Gehäusedeckels 22 dient, wozu beispielsweise zusätzliche in der Zeichnung nicht dargestellten Befestigungsmittel und/oder Dichtmittel vorgesehen sein können.

Der Gehäusedeckel 22 ist exemplarisch aus einem Metallmaterial oder einem Kunststoffmaterial hergestellt, beispielsweise aus demselben Material, wie das Gehäuse 21.

Es ist vorgesehen, dass an dem Gehäuse 21, insbesondere an der Gehäusewand 25, eine Rotorachse 40 angeordnet sein kann. Die Rotorachse 40 ist vorzugsweise ortsfest am Gehäuse 21 oder an der Gehäusewand 25 angeordnet und definiert entlang ihrer Haupterstreckungsrichtung eine Drehlängsachse 12. In diesem Zusammenhang ist es beispielsweise vorteilhaft und insbesondere gemäß der Fig. 1 zu erkennen, dass die Drehlängsachse 12 und die Gehäuselängsachse 29 sozusagen parallel und insbesondere koaxial angeordnet sind.

Die Rotorachse 40 ist beispielsweise ein Zylinderkörper mit kreisrundem Querschnitt und vorzugsweise aus einem Kunststoffmaterial oder Metallmaterial hergestellt.

Jedenfalls dient die Rotorachse 40 dazu, einen Rotor 41 aufzunehmen, in der Art, dass der Rotor 41 an der Rotorachse 40 um die Drehlängsachse 12 herum rotierbar gelagert ist. Beispielsweise verfügt der Rotor 41 über entsprechende, in der Zeichnung nicht dargestellte, Lagerkörper 52 oder Rotorlager 52.

In diesem Zusammenhang sei auch erwähnt, dass die Rotorachse 40 zweckmäßigerweise durch eine mit dem Bezugszeichen 19 bezeichnete Gehäusedeckelöffnung durch den Gehäusedeckel 22 hindurch ragt, um sozusagen über eine eine Großfläche definierende Gehäusedeckelstirnseite 18 abzustehen. Denkbar ist, dass an dem über die Gehäusedeckelstirnseite 18 ragenden Rotorabschnitt 17 der Rotorachse 40 beispielsweise Stellgliedbefestigungsmittel angreifen.

Jedenfalls dient der Rotor 41 dazu, die Ankeranordnung 42 dauerhaft aufzunehmen, wobei es sich bei der Ankeranordnung 42 exemplarisch um in der Fig. 1 und der Fig. 2 durch eine Kreuzschraffur angedeutete Permanentmagnete 43 oder um eine entsprechende Permanentmagnetanordnung 43 handelt, die mit der Statoranordnung 20 zusammenwirkt, um ein Antriebsmoment und eine Antriebsleistung bereitzustellen.

Der Rotor 41 ist, wie das Gehäuse 21, exemplarisch von topfartiger Gestalt und zweckmäßigerweise von zylindrischer Gestalt. Er hat eine Rotorlängsachse 50 und verfügt über einen runden, ovalen oder vieleckigen Querschnitt bezogen auf die Rotorlängsachse 50.

Der Rotor 41 definiert einen Rotorboden 44, von dem aus eine Rotorwand 45 winkelig, insbesondere orthogonal, weg ragt. Bezüglich der Rotorlängsachse 50 ist die Rotorwand 45 exemplarisch parallel und der Rotorboden 44 orthogonal orientiert. Ferner ist die Rotorlängsachse 50 parallel, insbesondere koaxial, zur Drehlängsachse 12 angeordnet.

Ferner begrenzt der Rotor 41, insbesondere zwischen dem Rotorboden 44 und der Rotorwand 45, eine Rotoraufnahme 51, die man auch als Rotoraufnahmeraum bezeichnen könnte. In der Rotoraufnahme 51 ist die Ankeranordnung 42 bzw. sind die Permanentmagnetanordnung 43 oder der Permanentmagnete 43 angeordnet.

Wie oben bereits erwähnt, ist die Statoranordnung 20 in dem Gehäuse 21 angeordnet, wobei die Statoranordnung 20 am Gehäuse 21 beispielsweise mittels nicht dargestellten Befestigungsmitteln befestigt ist, etwa Befestigungsschrauben oder einem Klebstoff. Es ist auch vorstellbar, dass das Gehäuse 21 und die Statoranordnung 20 einstückig hergestellt sind.

Jedenfalls definiert die Statoranordnung 20 einen oder mehrere sich längs der Drehlängsachse 12 erstreckende Bestückungsabschnitte 60, die jeweils zum Bestücken mit jeweils einem Statorantriebsmittel 61 der Statoranordnung 20 dienen. Die Statoranordnung 20 definiert darüber hinaus auch einen oder mehrere sich längs der Drehlängsachse 12 erstreckende freie Kanalführungsabschnitte 62.

Die Statorantriebsmittel 61 bilden sozusagen die antriebswirksame Antriebskomponente der elektrischen Antriebsvorrichtung 10, die mit der Ankeranordnung 42 zusammenwirkt, um ein Antriebsmoment und eine Antriebsleistung der elektrischen Antriebsvorrichtung 10 bereitzustellen. Jedes Statorantriebsmittel 61 hat eine Statorantriebsmittel-Mantelfläche 63, die von einer an dem jeweiligen Bestückungsabschnitt 60 angeordneten Spulenwindungsanordnung 65 gebildet ist, wobei die Spulenwindungsanordnung 65 zweckmäßigerweise eine Mehrzahl von quer zur Drehlängsachse 12 orientierte Spulenwindungen umfasst.

Grundsätzlich können die Statorantriebsmittel 61 bzw. der Stator 20 mit einer Elektromotor-Steuereinrichtung 200 gesteuert oder geregelt werden. Dazu sind beispielsweise Leitungen 201, 202 vorgesehen, die das Statorantriebsmittel 61 bzw. den Stator 20 mit der Elektromotor-Steuereinrichtung 200 elektrisch verbinden.

In Fig. 2 ist beispielsweise zu erkennen, dass die Statoranordnung 20 in mehrere Bestückungsabschnitte 60 und mehrere Kanalführungsabschnitte 62 unterteilt ist, die in einer Umfangsrichtung 13 um die Drehlängsachse 12 herum kreisartig alternierend angeordnet sind. Die Bestückungsabschnitte 60 und die Kanalführungsabschnitte 62 liegen dabei berührend spaltfrei aneinander an, so dass sie einen zusammenhängenden lückenlosen Kreis bilden.

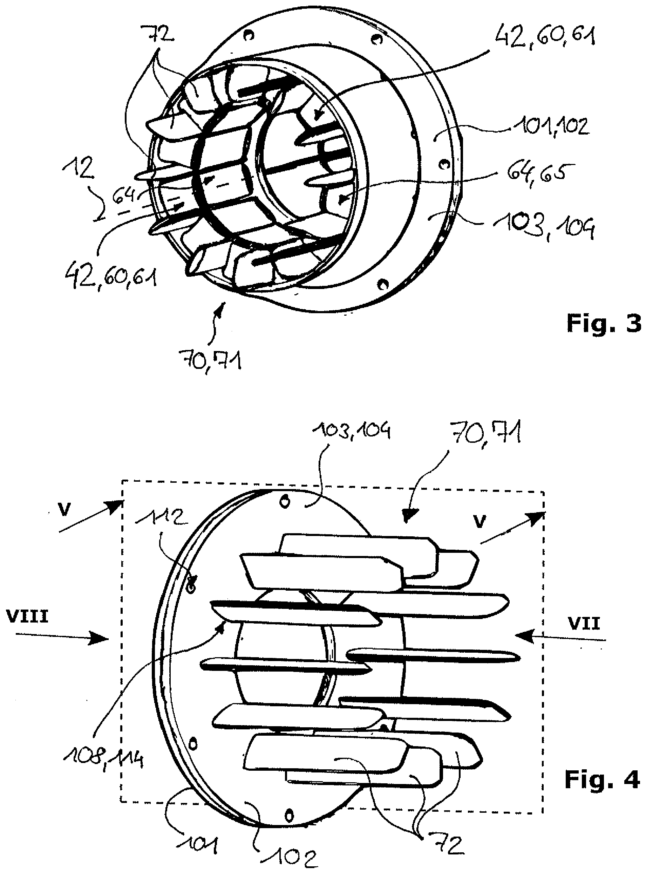

Die elektrische Antriebsvorrichtung verfügt über eine Wärmetauschereinrichtung 70 zum Kühlen der elektrischen Antriebsvorrichtung 10, wobei die Wärmetauschereinrichtung 70 ein von Wärmetauscherfluid durchströmbares Fluidkanalsystem 71 definiert. Das Fluidkanalsystem 71 setzt sich seinerseits aus wenigstens einem Fluidkanal 72 zusammen in den über wenigstens eine Fluidzulauföffnung 75 Wärmetauscherfluid hineinströmen und über wenigstens eine Fluidablauföffnung 76 Wärmetauscherfluid abströmen kann, was exemplarisch in Fig. 3 und 4 zu erkennen ist.

Gemäß Fig. 1 ist zu erkennen, dass eine nicht dargestellte für die Versorgung mit Wärmetauscherfluid vorgesehene Versorgungseinrichtung über Versorgungschläuche 203 mit der Wärmetauschereinrichtung 70 verbunden ist.

In Fig. 3 ist zu erkennen, dass sich mehrere Fluidkanäle 72 des Fluidkanalsystems 71 durch die Statoranordnung 20 erstrecken, insbesondere längs der dort gestrichelt dargestellten Drehlängsachse 12. Dabei liegt jeder Fluidkanal 72 an wenigstens einem Statorantriebsmittel 61 oder dessen Statorantriebsmittel-Mantelfläche 63 flächig berührend an, insbesondere an den Spulenwindungen 65.

In Fig. 2 ist ferner zu erkennen, dass die innerhalb der Bestückungsabschnitte 60 angeordneten Fluidkanäle 72 flächig oder vollflächig an den Statorantriebsmittel-Mantelflächen 63 anliegen, was vorliegend durch mehrere punktierte Linien dargestellt ist. Zusätzlich ist innerhalb der Bestückungsabschnitte 60 jeweils ein Fluidkanal-Rohling 73 dargestellt, wie sie im Rahmen eines Herstellverfahrens für eine Wärmetauschereinrichtung 70 in die Statoranordnung 20 eingesetzt werden. Dabei ist gut zu erkennen, dass die Fluidkanal-Rohlinge 73 im Unterschied zu den Fluidkanälen 72 lediglich punktuell an den Statorantriebsmittel 61 bzw. dessen Statorantriebsmittel-Mantelflächen 63 anliegen.

Jedenfalls definieren die Statorantriebsmittel-Mantelflächen 63 exemplarisch eine oder mehrere Statorantriebsmittel-Mantelflächen-Umfangsabschnitte 66, die jeweils in Umfangsrichtung 13 zwischen einem Bestückungsabschnitt 60 bzw. einem Statorantriebsmittel 61 und einem Kanalführungsabschnitt 62 sandwichartig angeordnet sind, sozusagen als Grenze zwischen dem Bestückungsabschnitt 60 bzw. einem Statorantriebsmittel 61 und einem Kanalführungsabschnitt 62.

In diesem Zusammenhang ist zu erwähnen, dass die Fluidkanäle 72 zweckmäßigerweise flächig oder vollflächig und/oder spaltfrei an den Statorantriebsmittel-Mantelflächen-Umfangsabschnitte 66 angelegt sind. Dies hat den Vorteil, dass die Wärmeverlustenergie relativ zügig von den Statorantriebsmitteln 61 auf das durch die Fluidkanäle 72 strömende Wärmetauscherfluid übertragen werden kann.

Was in der Fig. 2 exemplarisch durch punktierte Linien 74 dargestellt ist, zeigt, dass die Fluidkanäle 72 bezüglich der Drehlängsachse 12 jeweils einen quer orientierte Fluidkanalquerschnitt 74 aufweisen. Der Fluidkanalquerschnitt 74 ist dabei zweckmäßigerweise so gestaltet, dass er mit einer Querschnittsfläche 67 eines Kanalführungsabschnittes 62 deckungsgleich ist, wodurch die größtmögliche Fläche zwischen zwei in Umfangsrichtung 12 benachbarten Statorantriebsmitteln 61 belegt ist.

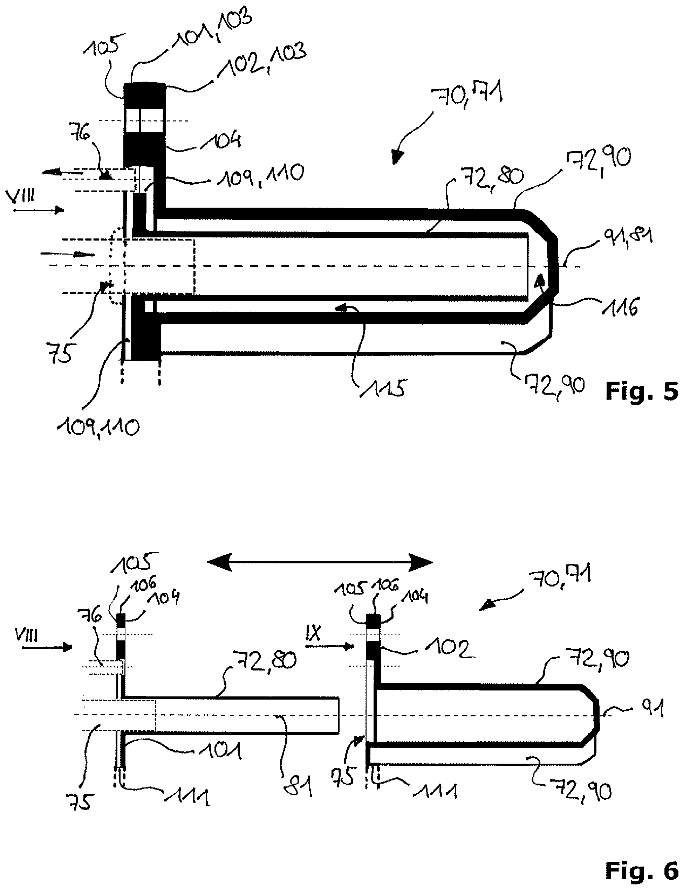

Jeder Fluidkanal 72 kann einen Zulaufkanal 80 und einen Rücklaufkanal 90 aufweisen, wie beispielsweise in den Figuren 5 und 6 zu erkennen ist, wobei die beiden Kanäle 80, 90 exemplarisch hohlzylindrisch sind und einen runden, ovalen oder vieleckigen Querschnitt bezüglich ihrer Hauptausdehnungsrichtung aufweisen.

Zweckmäßigerweise sind die Zulaufkanäle 80 und die Rücklaufkanäle 90 an zwei Kanalflanschen 101, 102 angeordnet, was beispielsweise in den Figuren 3 bis 6 exemplarisch dargestellt ist. Dabei ist vorgesehen, die Zulaufkanäle 80 an einem ersten Kanalflansch 101 und die Rücklaufkanäle 90 an einem zweiten Kanalflansch 102 anzuordnen.

Grundsätzlich ist jeder Kanalflansch 101, 102 ein ringförmiger Flachkörper 103, der beispielsweise aus einem Kunststoffmaterial oder einem Metallmaterial hergestellt sein kann. Der Flachkörper 103 weist beispielsweise eine runde, ovale oder vieleckige Außengestalt auf.

Jeder Flachkörper 103 hat eine Vordergroßseite 104 sowie eine dazu entgegengesetzt orientierte Rückgroßseite 105. Zu den Seiten hin ist der Flachkörper 103 durch eine Außenschmalseite 106 abgeschlossen. Der Flachkörper 103 weist ferner eine ihn vollständig durchsetzende Zentralausnehmung 107 auf, bei der es sich exemplarisch um eine am Flachkörper 103 zentrisch angeordnete Zentralausnehmung 107 handelt. Denkbar ist allerdings, dass die Zentralausnehmung 107 am Flachkörper 103 beispielsweise exzentrisch angeordnet ist. Jedenfalls hat der Flachkörper 103 eine Innenschmalseite 111, die nach innen hin zur Zentralausnehmung 107 orientiert ist.

Jeder Flachkörper 103 weist eine Kanalflanschbefestigungsanordnung 112 auf, die einen Satz von Kanalflanschbefestigungs-Ausnehmungen 113 umfasst, die den Flachkörper 103 zweckmäßigerweise vollständig durchsetzen und zum gegenseitigen Befestigen der Flachkörper 103 dienen. Die Kanalflanschbefestigungs-Ausnehmungen 113 sind beispielsweise kranzartig und mit gleichem Abstand zueinander in einer Umfangsrichtung um den Flachkörper 103 herum entlang einer imaginären, in der Zeichnung nicht dargestellten, Kreisringlinie angeordnet.

Jeder Flachkörper 103 weist ferner eine Fluidkanalausnehmungs-Anordnung 108 auf, die einen Satz von Fluidkanalausnehmungen 114 umfasst, die den Flachkörper 103 zweckmäßigerweise vollständig durchsetzen und zum Anordnen, insbesondere zum Einstecken, von Fluidkanälen 72 dienen. Die Fluidkanalausnehmungen 114 sind mit gleichem Abstand zueinander in einer Umfangsrichtung um den Flachkörper 103 herum entlang einer imaginären, in der Zeichnung nicht dargestellten, Kreisringlinie angeordnet.

Wenigstens ein Flachkörper 103 weist eine an einer Rückgroßseite 105 angeordnete Ringausnehmung 109 auf, die in den Flachkörper 103 eingebracht ist und diesen nicht vollständig durchsetzt, beispielsweise lediglich bis zur Hälfte. Der Flachkörper 103 weist somit sozusagen zwei voneinander getrennte terrassenartige Großflächen auf.

Jedenfalls kann in jeweils eine Fluidkanalausnehmung 114 ein Fluidkanal 72 eingesteckt sein, insbesondere ein Zulaufkanal 80 oder ein Rücklaufkanal 90. Zweckmäßig ist es dabei, wenn an dem ersten Kanalflansch 101 ein oder mehrere Zulaufkanäle 80 angeordnet sind, beispielsweise in die Fluidkanalausnehmungen 114 eingesteckt sind. An dem zweiten Kanalflansch 102 können dann ein oder mehrere Rücklaufkanäle 90 vorgesehen sein, die in die dortigen Fluidkanalausnehmungen 114 eingesteckt sind. Die Zulaufkanäle 80 und die Rücklaufkanäle 90 sind exemplarisch orthogonal zu den Kanalflanschen 101, 102 angeordnet, so dass sie sozusagen fingerartig von den Kanalflansch 101 102 weg ragen. Das ist beispielsweise in den Fig. 5 und 6 zu erkennen.

Im Betrieb der elektrischen Antriebsvorrichtung 10 ist vorgesehen, dass die die Zulaufkanäle 80 und die Rücklaufkanäle 90 tragenden Kanalflansche 101, 102 aneinander berührend angeordnet sind und zwar so, dass die Zulaufkanäle 80 innerhalb der Rücklaufkanäle 90 angeordnet sind oder umgekehrt. Dadurch wird zwischen den Zulaufkanälen 80 und den Rücklaufkanälen 90 jeweils ein Fluidkanalringraum 115 und ein Überströmraum 116 gebildet. Ferner ist zwischen den beiden aneinander berührend anliegenden Kanalflanschen 101, 102 jeweils mindestens ein Fluidreservoir 110 gebildet. Zweckmäßigerweise ist das Fluidreservoir 110 zwischen einer Vordergroßseite 104 eines Kanalkörpers 101, 102 und einer Rückgroßseite 105 eines anderen Kanalflanschs 101, 102 gebildet, wobei das Fluidreservoir 110 exemplarisch durch die an der Rückgroßseite 105 angeordnete Ringausnehmung 109 gebildet ist.

Dabei ist es zweckmäßig, wenn ein Zulaufkanal 80 eine Zulauflängsachse 81 und ein Rücklaufkanal 90 eine Rücklauflängsachse 91 hat. Die Zulauflängsachsen 81 und die Rücklauflängsachsen 91 sind, wie beispielsweise in Fig. 5 zu erkennen ist, zueinander parallel angeordnet. Von Vorteil ist es allerdings, wenn die Zulauflängsachsen 81 und die Rücklauflängsachsen 91 zueinander koaxial und parallel zur Drehlängsachse 12 orientiert sind.

## Patentansprüche

1. Elektrische Antriebsvorrichtung (10), insbesondere für ein Kraftfahrzeug,
- mit einem Elektromotor (11), der eine Statoranordnung (20) und eine Ankeranordnung (42) aufweist,
- mit einem Gehäusedeckel (22),
- mit einem vom Gehäusedeckel (22) verschließbaren Gehäuse (21) zur Aufnahme der Statoranordnung (20),
- mit einer ortsfest am Gehäuse (21) angeordneten und eine Drehlängsachse (12) aufweisenden Rotorachse (40),
- mit einem an der Rotorachse (40) um die Drehlängsachse (12) rotierbar angeordneten Rotor (41) zur Aufnahme der Ankeranordnung (42),
- wobei die Statoranordnung (20) einen oder mehrere sich längs der Drehlängsachse (12) erstreckende Bestückungsabschnitte (60) jeweils zum Bestücken mit Statorantriebsmitteln (61) und einen oder mehrere sich längs der Drehlängsachse (12) erstreckende freie Kanalführungsabschnitte (62) umfasst,
**gekennzeichnet durch**,
- eine Wärmetauschereinrichtung (70) zum Austauschen von Wärmeverlustenergie zwischen der Statoranordnung (20) und/oder der Ankeranordnung (42) einerseits und einem Wärmetauscherfluid andererseits,
- wobei die Wärmetauschereinrichtung (70) ein von dem Wärmetauscherfluid durchströmbares Fluidkanalsystem (71) umfasst, das wenigstens einen Fluidkanal (72) aufweist, der sich durch die Statoranordnung (20) erstreckt,
- wobei jeder Fluidkanal (72) an wenigstens einer Statorantriebsmittel-Mantelfläche (63) eines Statorantriebsmittels (61) berührend angelegt ist.

2. Antriebsvorrichtung nach Anspruch 1, **dadurch gekennzeichnet,**
- **dass** jeder Fluidkanal (72) spaltfrei an einer Statorantriebsmittel-Mantelfläche (63) berührend anliegt.

3. Antriebsvorrichtung nach Anspruch 1 oder 2, **dadurch gekennzeichnet,**
- **dass** mehrere Kanalführungsabschnitte (62) und mehrere Bestückungsabschnitte (60) in einer Umfangsrichtung (13) um die Drehlängsachse (12) herum alternierend aneinander berührend angeordnet sind, wobei jeder Kanalführungsabschnitt (62) einen Fluidkanal (72) aufweist.

4. Antriebsvorrichtung nach einem der vorhergehenden Ansprüche, **dadurch gekennzeichnet,**
- **dass** jeder Fluidkanal (72) flächig oder vollflächig an mindestens einem Statorantriebsmittel-Mantelflächen-Umfangsabschnitt (66) einer der Statorantriebsmittel-Mantelflächen (63) anliegt, wobei jeder Statorantriebsmittel-Mantelflächen-Umfangsabschnitt (66) in einer Umfangsrichtung (13) um die Drehlängsachse (12) herum sandwichartig zwischen einem Bestückungsabschnitt (60) einerseits und einem Kanalführungsabschnitt (62) andererseits angeordnet ist.

5. Antriebsvorrichtung nach einem der vorhergehenden Ansprüche, **dadurch gekennzeichnet,**
- **dass** jede Statorantriebsmittel-Mantelfläche (63) oder jeder Statorantriebsmittel-Mantelflächen-Umfangsabschnitt (66) eine Spulenwindungsoberfläche (64) ist, die von einer an dem jeweiligen Bestückungsabschnitt (60) angeordneten Spulenwindungsanordnung (65) gebildet ist, wobei die Spulenwindungsanordnung (65) zweckmäßigerweise eine Mehrzahl von quer oder längs zur Drehlängsachse (12) orientierte Spulenwindungen (65) umfasst.

6. Antriebsvorrichtung nach einem der vorhergehenden Ansprüche, **dadurch gekennzeichnet,**
- **dass** ein Fluidkanal (72) einen von Wärmetauscherfluid durchströmbaren Zulaufkanal (80) und einen von Wärmetauscherfluid durchströmbaren Rücklaufkanal (90) umfasst und/oder
- **dass** der Zulaufkanal (80) und der Rücklaufkanal (90) jeweils von hohlzylindrischer Gestalt sind und einen durchgängig vollständigen kreisringartigen, runden, ovalen oder vieleckigen Querschnitt bezogen auf ihre Hauptausdehnungsrichtung aufweisen und/oder
- **dass** der Zulaufkanal (80) und der Rücklaufkanal (90) jeweils von einem dünnwandigen Rohrkanalkörper gebildet ist.

7. Antriebsvorrichtung nach einem der vorhergehenden Ansprüche, **dadurch gekennzeichnet,**
- **dass** wenigstens ein Fluidkanal (72) oder ein Zulaufkanal (80) und/oder ein Rücklaufkanal (90) aus Kunststoffmaterial hergestellt sind, insbesondere aus einem Thermoplastmaterial.

8. Antriebsvorrichtung nach einem der vorhergehenden Ansprüche, **dadurch gekennzeichnet,**
- **dass** das Fluidkanalsystem (71) wenigstens eine Fluidzulauföffnung (75) und wenigstens eine Fluidablauföffnung (76) umfasst, durch die hindurch Wärmetauscherfluid an wenigstens einem Fluidkanal (72) oder einem Zulaufkanal (80) und einem Rücklaufkanal (90) bereitgestellt werden kann und/oder
- **dass** zwischen einer Fluidzulauföffnung (75) des Fluidkanalsystems (71) und wenigstens einem Fluidkanal (72) oder einem Zulaufkanal (80) und/oder zwischen einer Fluidablauföffnung (76) des Fluidkanalsystems (71) und wenigstens einem Fluidkanal (72) oder einem Rücklaufkanal (90) jeweils ein Fluidreservoir (110) angeordnet ist.

9. Antriebsvorrichtung nach einem der vorhergehenden Ansprüche, **dadurch gekennzeichnet,**
- **dass** einer oder mehrere Fluidkanäle (72) an einem Kanalflansch (101, 102) angeordnet sind und/oder
- **dass** mehrere Fluidkanäle (72) vorgesehen sind, die entlang einer imaginären Kanalflansch-Kreislinie mit gegenseitigem Abstand zueinander in Umfangsrichtung der Kanalflansch-Kreislinie an einem Kanalflansch (101, 102) winkelig, insbesondere rechtwinkelig, angeordnet sind.

10. Antriebsvorrichtung nach einem der Ansprüche 6 bis 9, **dadurch gekennzeichnet,**
- **dass** ein oder mehrere Zulaufkanäle (80) entlang einer imaginären Kanalflansch-Kreislinie mit gegenseitigem Abstand zueinander in Umfangsrichtung der Kanalflansch-Kreislinie winkelig an einem ersten Kanalflansch (101) und ein oder mehrere Rücklaufkanäle (90) entlang einer imaginären Kanalflansch-Kreislinie mit gegenseitigem Abstand zueinander in Umfangsrichtung der Kanalflansch-Kreislinie mit gleichem Winkel an einem zweiten Kanalflansch (102) angeordnet sind,
- wobei die am zweiten Kanalflansch (102) angeordneten Rücklaufkanäle (90) im Betrieb der Antriebsvorrichtung (10) in die am ersten Kanalflansch (101) angeordneten Zulaufkanäle (80) eingesteckt sind oder umgekehrt und/oder
- wobei jeder Zulaufkanal (80) mit einem Rücklaufkanal (90) einen von Wärmetauscherfluid durchströmbaren und sich in Richtung der Drehlängsachse (12) erstreckenden Fluidkanalringraum (115) bildet.

11. Antriebsvorrichtung nach einem der Ansprüche 6 bis 10, **dadurch gekennzeichnet,**
- **dass** im Betrieb der elektrischen Antriebsvorrichtung (10) ein Rücklaufkanal (90) innerhalb eines Zulaufkanals (80) angeordnet ist oder umgekehrt, wobei der Zulaufkanal (80) eine Zulauflängsachse (81) hat, wobei der Rücklaufkanal (90) eine Rücklauflängsachse (91) hat, wobei die Zulauflängsachse (81) und die Rücklauflängsachse (91) zueinander parallel, insbesondere zueinander koaxial, und insbesondere parallel zur Drehlängsachse (12) angeordnet sind.

12. Antriebsvorrichtung nach Anspruch 6 bis 11, **dadurch gekennzeichnet,**
- **dass** zwischen dem Zulaufkanal (80) und dem Rücklaufkanal (90) ein Überströmraum (116) vorgesehen ist, wobei ein durch den Zulaufkanal (80) heranströmendes Wärmetauscherfluid durch den Überströmraum (116) hindurch in den Rücklaufkanal (90) überströmen kann.

13. Antriebsvorrichtung nach Anspruch 9 bis 12, **dadurch gekennzeichnet,**
- **dass** an wenigstens einem oder jedem Kanalflansch (101, 102) eine den jeweiligen Kanalflansch (101, 102) vollständig durchsetzende Zentralausnehmung (107) angeordnet ist, wobei
- einer oder jeder Kanalflansch (101, 102) eine Ausnehmung, insbesondere eine Ringausnehmung (109), aufweist, die den jeweiligen Kanalflansch (101, 102) von einer Vordergroßseitenfläche (104) oder einer Rückgroßseitenfläche (105) des jeweiligen Kanalflansches (101, 102) her teilweise durchsetzt.

14. Antriebsvorrichtung nach einem der Ansprüche 9 bis 13, **dadurch gekennzeichnet,**
- **dass** der erste Kanalflansch (101) und der zweiten Kanalflansch (102) im Betrieb der Antriebsvorrichtung (10) berührend aneinander anliegen, wobei zwischen dem erste Kanalflansch (101) und dem zweiten Kanalflansch (102) eine ein Fluidreservoir (110) bildende erste Ausnehmung, insbesondere eine Ringausnehmung (109), angeordnet ist und/oder
- wobei an einem der Kanalflansche (101, 102) eine von einer Deckelvorrichtung verschleißbare ein weiteres Fluidreservoir (110) bildende zweite Ringausnehmung (109) angeordnet ist und/oder
- **dass** eine oder jede Ringausnehmung (109) ein zylindrisches Fluidreservoir (110) definiert, das einen bezüglich der Drehlängsachse (12) quer orientierten runden, ovalen oder vieleckigen Querschnitt hat und/oder
- **dass** jedes Fluidreservoir (110) fluidisch mit einem Fluidkanal (72) oder einem Zulaufkanal (80) oder einem Rücklaufkanal (90) und einer Fluidzulauföffnung (75) oder einer Fluidablauföffnung (76) verbunden ist.

15. Herstellverfahren für eine Wärmetauschereinrichtung (70), insbesondere zur Verwendung bei einer elektrischen Antriebsvorrichtung (10) nach einem der vorhergehenden Ansprüche, umfassend
- eine Wärmetauschereinrichtung (70),
- ein von dem Wärmetauscherfluid durchströmbares Fluidkanalsystem (71) mit wenigstens einem Fluidkanal (72) mit den Schritten:
1) Einsetzen eines ersten Satzes von aus einem Kunststoffmaterial, insbesondere einem Thermoplast, hergestellten Fluidkanal-Rohlingen (73) in freie Kanalführungsabschnitte (62) einer Statoranordnung (20) der Antriebsvorrichtung (10),
2) Erwärmen der Fluidkanal-Rohlinge (73) des ersten Satzes, bis diese jeweils über die jeweilige Glasübergangstemperatur erwärmt sind,
3) Beaufschlagen der Fluidkanal-Rohlinge (73) des ersten Satzes mit Innendruck, so dass sich diese bezüglich ihrer Haupterstreckungsrichtung quer aufweiten,
4) Aufrechthalten des Innendrucks in den Fluidkanal-Rohlingen (73) des ersten Satzes, bis eine oder alle Fluidkanal-Rohlinge (73) des ersten Satzes an Statorantriebsmittel-Mantelflächen (63) von Statorantriebsmitteln (61) der Statoranordnung (20) flächig berührend anliegen,
5) Abkühlen der Fluidkanal-Rohlinge (73) des ersten Satzes,
6) Anspritzen eines Kanalflanschs (101) an die Fluidkanal-Rohlinge (73) des ersten Satzes,
7) Einstecken eines zweiten Satzes von im Querschnitt kleiner als die Fluidkanal-Rohlingen (73) des ersten Satzes gestalteten und an einem weiteren Kanalflansch (102) angeordneten Fluidkanal-Rohlingen (73), so dass die Fluidkanal-Rohlinge (73) des zweiten Satzes in die Fluidkanal-Rohlinge (73) des ersten Satzes hineinragen und die beiden Kanalflansche (101, 102) aneinander berührend anliegen,
8) gegenseitiges fixieren der Kanalflansche (101, 102).
